# FASCICULE DE BREVET EUROPEEN

(11) **EP 1 618 648 B1**
(45) Date de publication et mention de la délivrance du brevet: **13.09.2006**
(21) Numéro de dépôt: 04742602.8
(22) Date de dépôt: 28.04.2004
(51) Int. Cl.: H02N 2/00

(54) **MOTEUR PIEZOELECTRIQUE PERMETTANT AU MOINS DEUX DEGRES DE LIBERTE, EN ROTATION ET EN DEPLACEMENT LINEAIRE**
PIEZOELEKTRISCHER MOTOR ERMÖGLICHEND ZUMINDEST ZWEI FREIHEITSGRADE, ROTATION UND LINEARE VERSCHIEBUNG
PIEZOELECTRIC MOTOR ALLOWING AT LEAST TWO DEGREES OF FREEDOM, IN ROTATION AND LINEAR DISPLACEMENT

(30) Priorité: 28.04.2003 FR 0305145
(43) Date de publication de la demande: 25.01.2006
(73) Titulaire: Centre National De La Recherche Scientifique-CNRS, 75794 Paris Cedex 16 (FR); INSTITUT NATIONAL POLYTECHNIQUE DE TOULOUSE (I.N.P.T.), 31029 Toulouse Cedex 4 (FR)
(72) Inventeur: BUDINGER, Marc, René, Christian, F-31500 Toulouse (FR); ROUCHON, Jean-François, Roland, F-31600 Muret (FR); NOGAREDE, Bertrand, F-31000 Toulouse (FR)
(74) Mandataire: Pontet, Bernard
(86) Numéro de dépôt international: PCT/FR2004/001036
(87) Numéro de publication internationale: WO 2004/098039

(56) Documents cités:
- EP-A- 0 364 418
- FR-A- 1 456 127
- US-A- 4 219 755
- US-B1- 6 211 605
- PATENT ABSTRACTS OF JAPAN vol. 011, no. 286 (E-541), 16 septembre 1987 (1987-09-16) -& JP 62 085682 A (NEC CORP), 20 avril 1987 (1987-04-20)

## Description

La présente invention concerne un moteur à deux degrés de liberté, l'un en rotation et l'autre en déplacement linéaire selon une direction longitudinale, notamment un moteur utilisant des matériaux électroactifs. Elle concerne aussi un procédé de fonctionnement d'un tel moteur. Elle concerne aussi un élément mobile comprenant un tel moteur.

Des systèmes mécaniques complexes, notamment des applications aéronautiques embarquées nécessitent, par exemple, le déplacement de verrous en translation et en rotation. Ces déplacements sont réalisés actuellement par deux actionneurs distincts, généralement électromagnétiques, ce qui est encombrant.

Des moteurs pas à pas utilisant des vérins piézoélectriques pour générer des mouvements soit linéaires soit rotatifs sont décrits dans les documents US 4 219 755 et FR 1 456 127, par exemple. De plus, le document US 6 211 605 divulgue le déplacement linéaire et rotatif d'un élément mobile utilisant ces mêmes vérins.

Le but de l'invention est de proposer un moteur capable d'intégrer les deux déplacements, et pouvant être d'un format plus compact que les moteurs de l'art antérieur.

Cet objectif est atteint avec moteur comprenant un stator et un rotor, le stator comprenant des vérins pour manoeuvrer des crampons assurant le maintien du stator et son déplacement linéaire le long d'un guide, ces mêmes vérins étant utilisés pour la mise en rotation du rotor.

Selon un premier aspect de l'invention, celle-ci concerne un moteur comprenant un équipage comportant au moins un crampon antérieur et un crampon postérieur et au moins un premier vérin et un deuxième vérin à double-effet longitudinal, le premier crampon étant maintenu entre les extrémités antérieures respectives desdits vérins, et le deuxième crampon étant maintenu entre les extrémités postérieures respectives desdits vérins.

Préférablement, dans un moteur selon l'invention, les extrémités antérieure et postérieure du premier vérin sont respectivement positionnées devant les extrémités antérieure et postérieure du deuxième vérin. Les crampons sont réversiblement déformables de sorte que si l'un des crampons est comprimé entre les extrémités des vérins qui le maintiennent, il subit une expansion transversale.

Ce moteur comprend en outre des moyens pour commander des mouvements alternatifs d'allongement et de raccourcissement de chacun des vérins, les mouvements respectifs des premier vérin et deuxième vérin étant déphasés.

Un tel moteur est adapté pour être monté sur un guide et les crampons prévus pour se bloquer sur ce guide. Par exemple, si le guide est de forme tubulaire, le blocage peut se faire par coincement du crampon à l'intérieur du guide, du fait de son expansion transversale, c'est à dire qu'une dimension transversale du crampon tant à devenir supérieur à celle du guide tubulaire et le crampon vient en appui sur le guide et ainsi se bloque contre celui-ci.

Si le guide a la forme d'une tige ou d'un rail autour duquel est positionné le crampon, le blocage peut se faire par pincement du crampon sur le guide, c'est à dire que du fait de l'expansion du crampon, l'espace disponible pour le guide le traversant tend à devenir insuffisant pour le passage du guide. Ainsi, l'équipage se déplace linéairement le long du guide, alternativement bloquant l'un des crampons et avançant l'autre, telle une chenille (l'animal). Le guide peut être rectiligne ou ne pas l'être.

Pour assurer un deuxième degré de liberté au moteur, ce moteur comprendra un stator et un rotor, mobiles en rotation l'un par rapport à l'autre, et l'équipage sera avantageusement intégré au stator, assurant ainsi le déplacement longitudinal du stator, donc du rotor et d'un élément monté sur le rotor pour être entraîné par le moteur. L'entraînement de cet élément peut alors se faire en rotation, en déplacement linéaire ou selon une combinaison des deux.

Les vérins peuvent comprendre un matériau électroactif, c'est à dire apte à se déformer sous l'action d'un champ électrique, notamment piézoélectrique. Ainsi, l'allongement du vérin peut être déterminé par l'allongement du matériau sous l'action du champ électrique. Des variations de longueur de grande amplitude, c'est à dire d'amplitude suffisante pour permettre le blocage et le déblocage des crampons, permettent ainsi le déplacement de l'équipage. Les au moins un vérins peuvent être un couple de premiers vérins et un couple de seconds vérins permettant, grâce à des variations de longueur de petite amplitude, c'est à dire n'entraînant pas le blocage et le déblocage des crampons, de créer une onde progressive sur le stator et entraîner un rotor en rotation. On peut utiliser en cela le principe décrit dans le document EP0538791 (Canon) qui présente un moteur rotatif piézoélectrique par effet de rotation de mode.

Les matériaux électroactifs, notamment piézo-électriques, permettent avantageusement d'assurer un verrouillage hors alimentation, c'est à dire que même non alimentés électriquement, les éléments constitutifs, tels un rotor et un stator, d'un tel moteur restent dans des positions relatives figées. On s'assurera pour cela que lorsque les vérins piézoélectriques ne sont plus alimentés, les crampons assurent néanmoins un blocage suffisant.

Selon un deuxième aspect de l'invention, il est proposé un procédé pour déplacer linéairement un tel équipage le long d'un guide, comprenant, à partir d'une position initiale telle que l'au moins un crampon antérieur et l'au moins un crampon postérieur sont tous deux bloqués sur le guide, les étapes suivantes:
- allongement de l'au moins un premier vérin; puis,
- allongement de l'au moins un deuxième vérin; puis,
- raccourcissement de l'au moins un premier vérin; puis,
- raccourcissement de l'au moins un deuxième vérin.

L'étape initiale a été arbitrairement choisie parmi toutes les étapes du déplacement. Ainsi, lors de l'allongement du premier vérin l'extrémité postérieure de celui-ci est en appui sur le crampon postérieur, lui-même bloqué sur le guide alors que l'extrémité antérieure avance librement

Le procédé ainsi décrit, permet de faire "avancer" l'équipage le long du guide, c'est à dire permettre son mouvement linéaire d'arrière en avant.

Les termes "avant", "arrière", "devant", derrière", "antérieur" et "postérieur" sont définis relativement à une direction longitudinale pour le déplacement linéaire de l'équipage et du moteur pourvu de cet équipage. Bien entendu, pour un équipage réversible cette direction est arbitrairement choisie et les différents termes sont alors susceptibles d'être interchangés selon le choix fait pour la direction du déplacement.

Ainsi, pour faire reculer l'équipage le procédé peut être décrit comme suit.

A partir d'une position initiale telle que l'au moins un crampon antérieur et l'au moins un crampon postérieur sont tous deux bloqués sur le guide, on réalise les étapes suivantes:
- allongement de l'au moins un deuxième vérin; puis,
- allongement de l'au moins un premier vérin; puis,
- raccourcissement de l'au moins un deuxième vérin; puis,
- raccourcissement de l'au moins un premier vérin.

Ceci ne correspond qu'a une inversion mécanique ou sémantique, sans que l'invention en soit pour autant différente et sans que cela change le fonctionnement général du moteur.

Un troisième aspect de l'invention est un élément mobile comprenant un tel moteur, par exemple un verrou ainsi motorisé.

Les crampons peuvent comprendre une coque en tôle, notamment métallique, creuse. Ils peuvent aussi comprendre un matériau plein et élastiquement déformable, par exemple du caoutchouc. Ces crampons peuvent comprendre aussi, sur une bande d'appui destinée à venir en contact avec le guide, des moyens antidérapants adaptés à la nature du guide et aux efforts à y transmettre.

Des moteurs selon l'invention présentent des avantages économiques et de fiabilité. L'utilisation de matériaux piézoélectriques est particulièrement adaptée à réaliser de petits moteurs de commande, en particulier pour l'industrie aéronautique.

D'autres particularités et avantages de l'invention ressortiront encore de la description ci-après, relative à des exemples non limitatifs.

Aux dessins annexés :
- la figure 1 est une vue en perspective d'un moteur selon l'invention;
- la figure 2 est une vue éclatée du stator du moteur de la figure 1;
- la figure 3 est une coupe longitudinale sur un crampon, en forme de coque, du moteur de la figure 1;
- les figures 4A-4E illustrent un mode de déplacement linéaire du moteur de la figure 1;
- la figure 5 est un schéma d'une alimentation électrique pour le moteur de la figure 1; et,
- la figure 6 une illustration de courbes caractéristiques de tension d'alimentation électrique en fonction du temps pour un déplacement linéaire et pour une rotation du moteur de la figure 1.

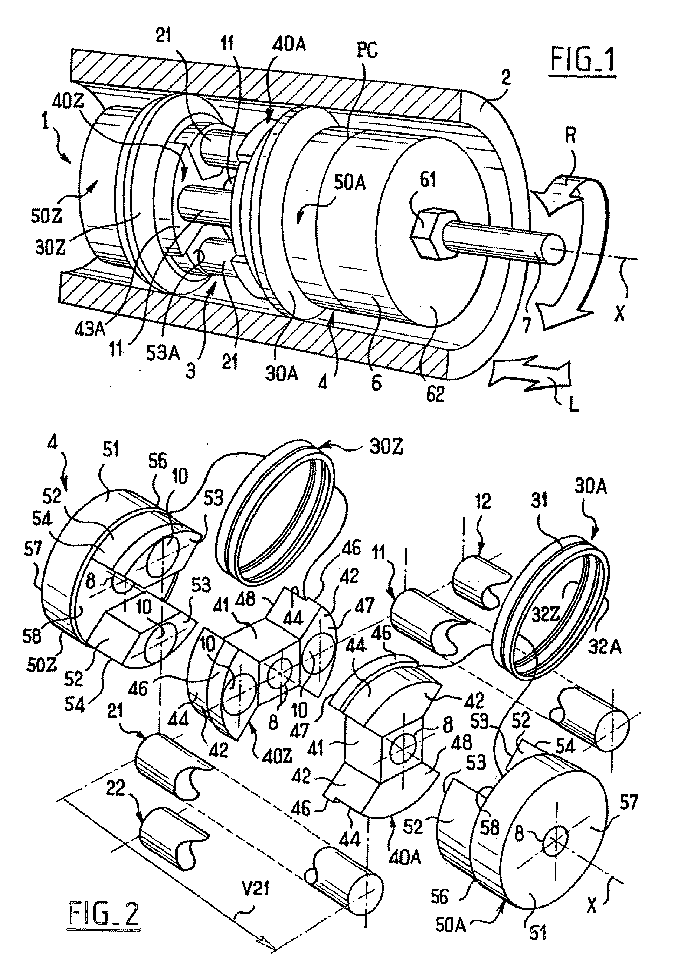

La figure 1 représente un moteur 1, monté dans un tube cylindrique 2, d'axe X de révolution, qui lui sert de guide et de support. Le moteur comprend un équipage 3, pour se déplacer linéairement, selon une direction longitudinale L parallèle à l'axe X, dans le tube 2. Le moteur 1 comprend en outre un rotor 6, et l'équipage est constitutif d'un stator 4 prévu pour entraîner le rotor 6 en rotation R autour de l'axe X. Le stator 4 et le rotor 6 ont chacun une forme générale de révolution dont l'axe se confond avec l'axe X du tube 2; ils sont axialement traversés par un arbre de rotation 7. L'arbre 7 est mobile en rotation avec le rotor 7; il est prévu pour y fixer un élément, non représenté, par exemple un verrou, entraîné par le moteur 1. Le rotor et le stator sont en contact selon un plan de contact PC transversal, c'est à dire perpendiculaire à l'axe X du tube 2. On appelle "avant" du moteur la partie du moteur où est monté le rotor 6. Ainsi, le rotor 6 est monté à l'avant du stator.

On va maintenant décrire le stator 4 en référence aux figures 1 et 2. La figure 2 représente de manière éclatée les principales pièces constitutives du stator. Ces pièces sont: deux premiers vérins 11,12, dont un vérin droit 11 et un vérin gauche 12, deux seconds vérins 21,22, dont un vérin haut 21 et un vérin bas 22, un crampon antérieur 30A, un crampon postérieur 30Z, un coupleur antérieur 40A, un coupleur postérieur 40Z, une contre-masse antérieure 50A et une contre-masse postérieure 50Z. Les deux coupleurs sont de formes et de tailles identiques entre eux. Les deux contre-masses sont de formes et de tailles identiques entre elles. Les contre-masses et les coupleurs sont des pièces rigides comprenant chacune un orifice 8 cylindrique les traversant longitudinalement pour le passage et le guidage en rotation de l'arbre 7.

Les termes "gauche", "droit", "haut" et "bas" ne sont utilisés que pour indiquer la position relative des pièces dans la position du moteur telle qu'illustrée aux figures. Cependant cette position du moteur est arbitraire et le moteur, dans sa configuration réelle, peut avoir une position quelconque et variable dans l'espace. En particulier, les termes"gauche" et "droit" sont relatifs à une vue depuis l'arrière.

Le coupleur postérieur 40Z, vu depuis l'avant ou l'arrière a une forme de papillon dont un corps 41, cubique, est traversé par un des orifices 8. Il comprend en outre, de part et d'autre du corps, deux ailes 42, symétriques, s'étendant transversalement depuis le corps 41. Le coupleur est limité longitudinalement par deux faces planes, perpendiculaires à l'axe longitudinal X du moteur, une face de vérinage 47 et une face de butée 48. Chacune des ailes est limitée extérieurement par une portion de cylindre 44 de révolution autour de l'axe X, s'étendant depuis la face arrière 43Z et limitée à l'avant par un épaulement 46.

Le coupleur antérieur 40A est disposé en vis à vis du coupleur postérieur 40Z de sorte que leurs faces de vérinage respectives 47 se font face. Les coupleurs sont en outre disposés en quadrature de sorte que les ailes 42 du coupleur postérieur 40Z sont disposées à droite et à gauche de son corps 41, alors que les ailes du coupleur antérieur 40A sont disposées au-dessus et en dessous de son corps.

La contre-masse postérieure 50Z comprend une masse cylindrique 51 d'axe de révolution X, percée en son axe par un des orifices 8 et limitée à l'arrière par une surface extérieure 57 et vers l'avant par une surface intérieure 58, toutes deux planes et perpendiculaires à l'axe X. Elle comprend en outre deux appendices 52, disposés symétriquement au-dessus et en dessous de l'axe X, et s'étendant longitudinalement vers l'avant depuis la surface intérieure 58.

Les appendices 52 ont des formes complémentaires de celles du coupleur postérieur, afin que le coupleur puisse s'y emboîter de sorte que les appendices 52 servent de guidage glissant longitudinal lors d'un déplacement longitudinal relatif du coupleur et de la contre-masse. Chacun des appendices est limité extérieurement par une portion de cylindre 54 de révolution autour de l'axe X, de même diamètre que les portions de cylindre 44 limitant extérieurement les ailes 42. La masse 51 a un diamètre supérieur à celui des portions de cylindre, de sorte qu'elle y forme un épaulement 56. Chaque appendice est limité vers l'avant par une face plane 53, perpendiculaire à l'axe X.

La contre-masse antérieure 50A est disposée en vis à vis de la contre-masse postérieure 50Z de sorte que leurs faces intérieures respectives 58 se font face. Les contre-masses sont en outre disposées en quadrature de sorte que les appendices 22 de la contre-masse antérieure 50A sont disposés à droite et à gauche permettant ainsi l'emboîtement et le coulissement du coupleur antérieur 40A dans la contre-masse antérieure 50A.

Ainsi, chaque appendice 52 est en vis à vis d'une aile 42, et la face 53 de chaque appendice 52 est en vis à vis d'une face de vérinage 47 d'un coupleur 50A,50Z. La face extérieure 57 de la contre-masse antérieure 50A définit le plan de contact PC entre ladite contre-masse antérieure et le rotor 6.

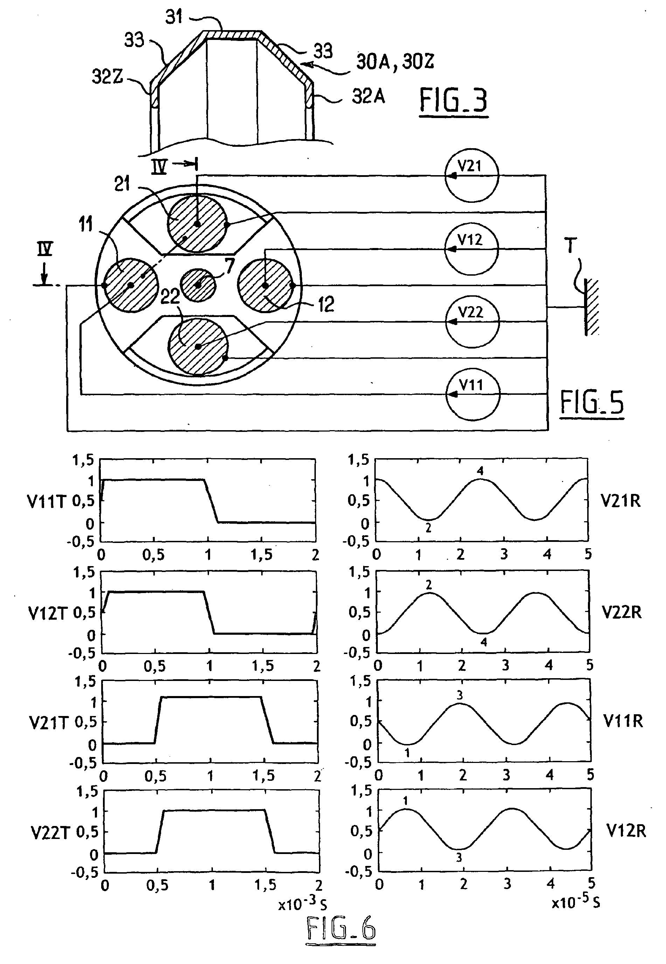

Les vérins 11,12,21,22 sont des cylindres de révolution, de tailles identiques et réalisés en une céramique piézo-électrique. Les vérins sont disposés longitudinalement, parallèlement à l'arbre 7 et équidistants de ce même arbre. Ils sont répartis régulièrement autour de l'arbre 7 de sorte que si on les regarde depuis l'avant vers l'arrière et que l'on fait le tour de l'arbre dans le sens trigonométrique à partir du vérin gauche 12, on rencontre successivement, chacun espacé de l'autre de 90 degrés: le vérin gauche 12, le vérin haut 21, le vérin droit 11 puis le vérin bas 22 (voir figure 5).

Le moteur 1 comprend en outre une alimentation électrique, non représentée aux figures 1 et 2 mais schématisée à la figure 5. Cette alimentation permet d'appliquer, entre deux extrémités opposées longitudinalement de chacun des vérins, une tension propre à chacun des vérins. Ainsi, sous l'action de cette tension et de sa variation, un vérin piézoélectrique peut s'allonger ou se raccourcir. Les tailles de vérins sont donc identiques uniquement pour des conditions de tension identiques. A la figure 2, à titre d'illustration, une tension V21 appliquée au vérin haut 21 est représentée sous la forme d'un vecteur.

Chaque vérin est monté fixé entre la face d'un appendice et la face de vérinage d'un coupleur. Le vérin droit 11 est monté entre l'appendice droit de la contre-masse antérieure 50A et l'aile droite du coupleur postérieur 40Z. Le vérin gauche 12 est monté entre l'appendice gauche de la contre-masse antérieure 50A et l'aile gauche du coupleur postérieur 40Z. Le vérin haut 21 est monté entre l'appendice haut de la contre-masse postérieure 50Z et l'aile basse du coupleur antérieur 40A. Le vérin bas 22 est monté entre l'appendice bas de la contre-masse postérieure 50Z et l'aile basse du coupleur antérieur 40A. Les empreintes 10 des vérins sur le coupleur et la contre-masse postérieurs sont représentées à la figure 2.

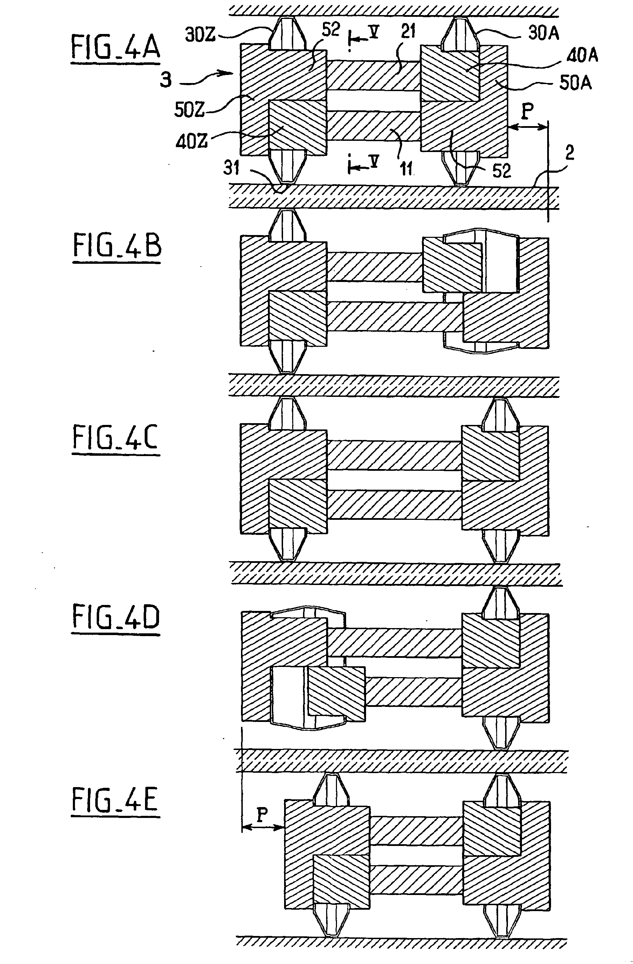

Les crampons 30A,30Z sont des coques métalliques souples de section sensiblement trapézoïdale. Ils ont une forme de révolution et leur diamètre intérieur est égal au diamètre des portions cylindriques 44,54. Les deux crampons sont identiques. Une coupe partielle par un plan transversal en est représentée à la figure 3. Chaque crampon comprend, à sa périphérie extérieure, une bande d'appui 31 cylindrique formant la petite base du trapèze. II comprend en outre une rive antérieure 32A et une rive postérieure 32Z dont le diamètre intérieur définit le diamètre intérieur du crampon. L'écartement longitudinal des rives 32A,32Z définit la grande base du trapèze. Chaque rive est reliée à la bande d'appui par un flanc tronconique 33. La grande base du flanc 33 est articulée sur la bande d'appui 31 et sa petite base est articulée sur la rive. Le crampon est apte à se déformer radialement et longitudinalement sous l'action d'un effort longitudinal.

La rive antérieure 32A du crampon antérieur 30A est fixée contre l'épaulement 56 de la contre-masse antérieure 50A et sa rive postérieure 32Z est fixée contre l'épaulement 46 du coupleur antérieur 40A. La rive antérieure 32A du crampon postérieur 30Z est fixée contre l'épaulement 46 du coupleur postérieur 40Z et sa rive postérieure 32Z est fixée contre l'épaulement 56 de la contre-masse postérieure 50Z. Ainsi, un coulissement longitudinal d'un coupleur relativement à la contre-masse correspondante entraîne une déformée longitudinale du crampon qui est fixé sur ceux-ci. La déformée longitudinale de ce crampon entraîne une déformée radiale de ce même crampon. Dans l'exemple illustré, un rapprochement du coupleur et de la contre-masse engendre une expansion radiale du crampon jusqu'à ce que la bande d'appui 31 du crampon vienne en contact avec l'intérieur du tube 2, permettant ainsi un embrayage du crampon sur le tube. Au contraire, un éloignement relatif du coupleur et de la contre-masse engendre un repli radial du crampon et le décollement de la bande d'appui 31 d'avec l'intérieur du tube 2. Pour limiter les efforts sur les crampons, le rapprochement d'une contre-masse et du coupleur qui y est emboîté, sera limité par la butée de la face de butée 48 du coupleur sur la face intérieure 57 de la contre-masse.

Les empilements constitués de la contre-masse postérieure 50Z, du coupleur postérieur 40Z, des vérins 11,12,21,22, du coupleur antérieur 40A et de la contre-masse antérieure 50A sont montés précontraints longitudinalement sur l'arbre 7. Ceci permet de protéger les céramiques et d'optimiser leur fonctionnement. D'autre part ceci assure un verrouillage des fonctions de translation et de rotation lorsque le moteur n'est plus alimenté électriquement. Les moyens de précontrainte comprennent à l'avant un écrou 61 formant butée, appuyé sur une face avant 62 du rotor 6. Ces moyens de précontrainte comprennent en outre, à l'opposé de l'écrou 61, des moyens de butée, non représentés, en appui sur la face extérieure 57 de la contre-masse postérieure 50Z. Ces moyens de butée sont prévus pour permettre l'allongement et la rotation du stator relativement à l'arbre 7.

Les formes des pièces sont dessinées de façon à rendre les figures suffisamment lisibles mais ne sont pas nécessairement des formes optimales. Ainsi, afin d'optimiser la course des vérins, le moteur est préférablement configuré pour que la déformée radiale des crampons soit de plus grande amplitude que leur déformée longitudinale correspondante.

On va maintenant décrire un mouvement linéaire du moteur 1 en référence aux figures 4A-4E. Le tube étant rectiligne ce mouvement est une translation. Les figures décrivent un déplacement du moteur d'un pas P vers l'avant. Un mouvement vers l'arrière s'effectuerait de la même manière. Les figures 4A-4E sont des coupes longitudinales de l'équipage 3 selon une surface virtuelle IV-IV, représentée à la figure 5, cette surface relie l'axe du vérin haut 21 et l'axe du vérin droit 11, s'étend verticalement vers le haut depuis l'axe du vérin haut 21 et s'étend horizontalement vers la droite depuis l'axe du vérin droit 11. Dans le mouvement de translation, le vérin gauche 12 a des mouvements identiques et simultanés à ceux du vérin droit 11, seul de ces deux représenté aux figures 4A-4E. De même, le vérin bas 22 a des mouvements identiques et simultanés à ceux du vérin haut 21, seul de ces deux représenté aux figures 4A-4E.

La figure 5 représente une coupe transversale V-V de l'équipage, vue de l'avant, au droit des vérins (voir figure 4A) et le schéma de l'alimentation électrique du moteur. Par rapport à une masse électrique T, une tension variable V11 est appliquée au vérin droit 11, une tension variable V12 est appliquée au vérin gauche 12, un tension variable V21 est appliquée au vérin haut 21 et une tension variable V22 est appliquée au vérin bas 22.

A figure 6, des graphiques de translation V21T, V22T, V11T et V12T, illustrent respectivement la variation des tensions V21, V22, V11 et V12 au cours de la translation des figures 4A-4E. Les graphiques de translation sont gradués en abscisses selon une échelle de temps en millisecondes et en ordonnés selon une échelle de tension arbitraire.

Dans une position initiale arbitraire représentée à la figure 4A, les vérins 21,22 ont la même longueur initiale, les crampons sont embrayés sur la paroi intérieure du tube 2, et les coupleurs sont en butée sur la contre-masse avec laquelle ils sont respectivement emboîtés.

Comme illustré à la figure 4B et sur les graphiques de translation de la figure 6 entre les abscisses 0 et 0,5, dans un premier temps les premiers vérins 11,12 sont allongés de la longueur de pas P sous l'action de tensions V11 et V12 maintenues constantes de valeur 1. Le déplacement du coupleur postérieur 40Z étant bloqué par l'embrayage du crampon postérieur 30Z, c'est la contre-masse antérieure 50A qui est avancée du pas P, ce qui a pour effet de débrayer le crampon antérieur 30A d'avec le tube 2.

Comme illustré à la figure 4C et sur les graphiques de translation de la figure 6 entre les abscisses 0,5 et 1, dans un deuxième temps les seconds vérins 21, 22 sont allongés de la longueur de pas P sous l'action de tensions V21 et V22 maintenues constantes de valeur 1. Pendant ce deuxième temps les tensions V11 et V12 sont maintenues constantes de valeur 1, afin de garder constant l'allongement des premiers vérins .Le coupleur antérieur 40A se rapproche jusqu'à venir en butée sur la contre-masse antérieure 50A, en déformant le crampon antérieur 30A jusqu'à ce que celui-ci embraye de nouveau sur le tube 2.

Comme illustré à la figure 4D et sur les graphiques de translation de la figure 6 entre les abscisses 1 et 1,5, dans un troisième temps les premiers vérins 11,12 sont racourcis de la longueur de pas P sous l'action de tensions V11 et V12 maintenues constantes de valeur 0. Pendant ce deuxième temps les tensions V21 et V22 sont maintenues constantes de valeur 1, afin de garder constant l'allongement des seconds vérins. Le déplacement de la contre-masse antérieure 50A étant bloqué par l'embrayage du crampon antérieur 30A, c'est le coupleur postérieur 40Z qui est avancé du pas P, ce qui a pour effet de débrayer le crampon postérieur 30Z d'avec le tube 2.

Comme illustré à la figure 4E et sur les graphiques de translation de la figure 6 entre les abscisses 1,5 et 2, dans un quatrième temps les seconds vérins 21, 22 sont raccourcis de la longueur de pas P sous l'action de tensions V21 et V22 maintenues constantes de valeur 0. Pendant ce deuxième temps les tensions V11 et V12 sont maintenues constantes de valeur 0, afin de maintenir courts les premiers vérins. La contre-masse postérieure 50Z se rapproche jusqu'à venir en butée sur le coupleur postérieur 40Z, en déformant le crampon postérieur 30Z jusqu'à ce que celui-ci embraye de nouveau sur le tube 2. L'équipage 3 se retrouve alors dans une position finale similaire à la position initiale de la figure 4A, mais décalé de la position initiale du pas P.

Plusieurs pas peuvent être faits successivement. Le pas peut être choisi en fonction de la déformée longitudinale maximale acceptable par les crampons.. Les dimensions longitudinales des ailes 42 et des appendices 52, sont choisies afin d'assurer un guidage et un emboîtement permanents entre coupleurs et contre-masses. La durée, ici 0,5 milliseconde, de chacune des phases précédemment décrites est au minimum celle nécessaire à chacun des vérins pour s'allonger ou se raccourcir de la longueur P.

Le mouvement de rotation est obtenu en exploitant un effet de rotation de mode. Cet effet est obtenu par la combinaison de deux modes de flexion transversale du stator en régime libre-libre, ces deux modes étant orthogonaux entre eux. Les noeuds de vibration de ces deux modes de flexion sont situés au droit des crampons.

Les graphiques de rotation V21R, V22R, V11R et V12R de la figure 6, illustrent respectivement la variation des tensions V21, V22, V11 et V12 permettant d'entraîner la rotation du rotor 6 par rapport au stator 4. Les graphiques de rotation sont gradués selon une échelle de temps en cent-millièmes de secondes en abscisses et une échelle de tension arbitraire en ordonnés.

Pour entraîner la rotation on applique aux vérins des tensions sinusoïdales à haute fréquence, de l'ordre de 10⁵ Hertz. Ces tensions sont en quadrature de phase, c'est à dire que la tension V11 appliquée au vérin droit 11 est en avance d'un quart de période sur la tension V22 appliquée au vérin bas 22, elle-même en avance d'un quart de période sur la tension V12 appliquée au vérin gauche 12, elle-même en avance d'un quart de période sur la tension V21 appliquée au vérin haut 21.

Ainsi, l'allongement du vérin haut 21 simultanément au raccourcissement du vérin bas 22 tend à faire fléchir le stator autour d'un centre virtuel situé sous le stator, alors que l'allongement du vérin droit 11 simultanément au raccourcissement du vérin gauche 12 tend à faire fléchir le stator autour d'un centre virtuel situé à gauche du stator, et inversement.

Les allongements et raccourcissements successifs des vérins, provoquent sur la face extérieure 57 de la contre-masse antérieure 50A des ondes progressives aptes à entraîner le rotor en rotation.

L'inversion des retards de phase entre les différentes tensions permet d'inverser le sens de rotation du rotor 6.

Les mêmes éléments actifs, ici les deux paires de vérins, sont donc utilisés par le moteur 1, à la fois pour la translation et la rotation.

Bien sûr, l'invention n'est pas limitée aux exemples qui viennent d'être décrits et de nombreux aménagements peuvent être apportés à ces exemples sans sortir du cadre de l'invention.

Ainsi, au lieu d'une coque, il est par exemple possible de réaliser des crampons de forme torique dans un matériau élastomère. De tels crampons peuvent venir se serrer autour ou à l'intérieur d'un guide.

Au lieu d'un guide rectiligne tel que décrit précédemment, le guide peut être courbe et ainsi permettre d'autres déplacements linéaires que la simple translation.

Le nombre de vérins peut être différent de quatre et les crampons plus nombreux. Ainsi, en utilisant les crampons par paires, au moins deux crampons étant, à tout instant, cramponnés au guide, on augmente la stabilité du moteur dans le tube.

Au lieu d'un seul rotor, le moteur peut en comprendre deux, chacun à une extrémité du stator, l'un à l'avant et l'autre à l'arrière. Ces deux rotors peuvent alors avantageusement être liés en rotation, par exemple par l'arbre, au travers du stator. Cette disposition permet de cumuler les couples fournis par chacun des rotors en augmentant la puissance du moteur.

## Revendications

1. Moteur (1) comprenant un stator (4) et un rotor (6), le stator comprenant des vérins (11,12,21,22) pour manoeuvrer des crampons (30A,30Z) assurant le maintien du stator et son déplacement linéaire (L) le long d'un guide (2), ces mêmes vérins étant utilisés pour la mise en rotation (R) du rotor.

2. Moteur selon la revendication 1, **caractérisé en ce que** le stator comprend un équipage (3) comportant au moins un crampon antérieur (30A) et un crampon postérieur (30Z) et au moins un premier vérin (11,12) et un deuxième vérin (21,22) à double-effet longitudinal, le premier crampon étant maintenu entre les extrémités antérieures respectives desdits vérins, et le deuxième crampon étant maintenu entre les extrémités postérieures respectives desdits vérins, les extrémités antérieure et postérieure du premier vérin étant respectivement positionnées devant les extrémités antérieure et postérieure du deuxième vérin, lesdits crampons étant réversiblement déformables de sorte que si l'un des crampons est comprimé entre les extrémités des vérins qui le maintiennent, il subit une expansion transversale.

3. Moteur selon la revendication 1 ou 2 **caractérisé en ce qu'**il comprend en outre des moyens pour commander des mouvements alternatifs d'allongement et de raccourcissement de chacun des vérins, les mouvements respectifs des premier vérin et deuxième vérin étant déphasés.

4. Moteur selon l'une des revendication 1 à 3, **caractérisé en ce que** le guide (2) est tubulaire et **en ce que** le maintien de l'équipage se fait par coincement d'au moins un crampon (30A,30Z) à l'intérieur du guide.

5. Moteur selon l'une des revendications 1 à 4, **caractérisé en ce qu'**il comprend en outre une contre-masse antérieure (50A), une contre-masse postérieure (50Z), un coupleur antérieur (40A) et un coupleur postérieur (40Z), l'au moins un premier vérin étant monté entre les entre la contre-masse antérieure et le coupleur postérieur, l'au moins un deuxième vérin étant monté entre le coupleur antérieur et la contre-masse postérieure, la contre-masse et le coupleur postérieures servant à déformer l'au moins un crampon postérieur, la contre-masse et le coupleur antérieures servant à déformer l'au moins un crampon antérieur.

6. Moteur selon l'une des revendications 1 à 5, **caractérisé en ce que** les crampons sont des coques métalliques souples.

7. Moteur selon l'une des revendications 1 à 6, **caractérisé en ce que** le rotor et le stator sont maintenus précontraints longitudinalement.

8. Moteur selon la revendication 7, **caractérisé en ce que** le rotor est en contact avec une face extérieure (57) de la contre-masse antérieure (50A).

9. Moteur selon la revendication 8, **caractérisé en ce que** l'au moins un premier vérin est une paire de premiers vérins (11,12) et **en ce que** l'au moins un deuxième vérin est une paire de seconds vérins (21,22) lesdits vérins étant régulièrement disposés autour d'un axe longitudinal (X) du moteur, équidistants de cet axe, chaque vérin occupant une position diamétralement opposée à celle d'un vérin de la même paire.

10. Moteur selon l'une des revendications 1 à 9, **caractérisé en ce que** les vérins comprennent un matériau électroactif.

11. Elément mobile comprenant un moteur selon l'une des revendications précédentes.

12. Procédé pour déplacer un moteur selon l'une des revendications 2 à 10 linéairement le long d'un guide (2) comprenant, à partir d'une position initiale telle que l'au moins un crampon antérieur (30A) et l'au moins un crampon postérieur (30Z) sont tous deux bloqués sur le guide, les étapes suivantes:
- allongement de l'au moins un premier vérin (11,12); puis,
- allongement de l'au moins un deuxième vérin (21,22); puis,
- raccourcissement de l'au moins un premier vérin; puis,
- raccourcissement de l'au moins un deuxième vérin.

13. Procédé pour faire tourner le rotor (6) d'un moteur selon la revendication 10, **caractérisé en ce que** l'on génère à l'aide des vérins une onde progressive sur la face extérieure (57) de la contre-masse antérieure (50A).

## Claims

1. Motor (1) comprising a stator (4) and a rotor (6), the stator comprising actuators (11, 12, 21, 22) for manoeuvring clamps (30A, 30Z) holding the stator and ensuring its linear displacement (L) along a guide (2), said actuators being used to set the rotor in rotation (R).

2. Motor according to claim 1, **characterized in that** the stator comprises an assembly (3) comprising at least one front clamp (30A) and one rear clamp (30Z) and at least one first longitudinal two-way actuator (11,12) and one second longitudinal two-way actuator (21, 22), the first clamp being held between the respective front ends of said actuators, and the second clamp being held between the respective rear ends of said actuators, the front and rear ends of the first actuator being positioned respectively in front of the front and rear ends of the second actuator, said clamps being reversibly deformable in such a manner that if one of the clamps is compressed between the ends of the actuators holding it, it undergoes a transverse expansion.

3. Motor according to claim 1 or 2, **characterized in that** it also comprises means for controlling alternating lengthening and shortening movements of each of the actuators, the respective movements of the first actuator and second actuator being out of phase.

4. Motor according to one of claims 1 to 3, **characterized in that** the guide is tubular and **in that** the assembly is held by wedging at least one clamp inside the guide.

5. Motor according to any one of claims 1 to 4, **characterized in that** it also comprises a front counterweight (50A), a rear counterweight (50Z), a front coupler (40A) and a rear coupler (40Z), the at least one first actuator being mounted between the front counterweight and the rear coupler, the at least one second actuator being mounted between the front coupler and the rear counterweight, the rear counterweight and coupler serving to deform the at least one rear clamp, the front counterweight and coupler serving to deform the at least one front clamp.

6. Motor according to any one of the claims 1 to 5, **characterized in that** the clamps are flexible metal shells.

7. Motor according to any one of claims 1 to 6, **characterized in that** the rotor and the stator are held pretensioned longitudinally.

8. Motor according to claim 7, **characterized in that** the rotor is in contact with an external face (57) of the front counterweight (50A).

9. Motor according to claim 8, **characterized in that** the at least one first actuator is a pair of first actuators (21, 22) and **in that** the at least one second actuator is a pair of second actuators (21, 22), said actuators being evenly arranged about a longitudinal axis (X) of the motor, equidistant from this axis, each actuator occupying a position diametrically opposite that of an actuator in the same pair.

10. Motor according to any one of claims 1 to 9, **characterized in that** the actuators comprise an electroactive material.

11. Mobile component comprising a motor according to any one of the preceding claims.

12. Method for displacing a motor according to one of claims 2 to 10 linearly along a guide (2), comprising, from an initial position such that the at least one front clamp (30A) and the at least one rear clamp (30Z) are both immobilized on the guide, the following steps:
- lengthening of the at least one first actuator (11, 12); then,
- lengthening of the at least one second actuator (21, 22); then,
- shortening of the at least one first actuator; then,
- shortening of the at least one second actuator.

13. Method for rotating the rotor of a motor (6) according to claim 10, **characterized in that** a progressive wave is generated on the external face (57) of the front counterweight (50A) by means of the actuators.

## Patentansprüche

1. Motor (1), umfassend einen Ständer (4) und einen Läufer (6), wobei der Ständer Stellglieder (11, 12, 21, 22) zur Betätigung von Klammern (30A, 30Z) umfasst, die den Halt des Ständers und seine lineare Bewegung (L) längs einer Führung (2) gewährleisten, wobei ebendiese Stellglieder für das In-Drehung-Versetzen (R) des Läufers verwendet werden.

2. Motor nach Anspruch 1, **dadurch gekennzeichnet, dass** der Ständer ein bewegliches Organ (3) umfasst, das mindestens eine vordere Klammer (30A) und eine hintere Klammer (30Z) und mindestens ein erstes Stellglied (11, 12) und ein zweites Stellglied (21, 22) mit Doppellängseffekt umfasst, wobei die erste Klammer zwischen den jeweiligen vorderen Enden der Stellglieder gehalten ist und die zweite Klammer zwischen den jeweiligen hinteren Enden der Stellglieder gehalten ist, das vordere und das hintere Ende des ersten Stellglieds jeweils vor dem vorderen und dem hinteren Ende des zweiten Stellglieds positioniert sind und die Klammern umkehrbar verformbar sind, so dass, wenn eine der Klammern zwischen den Enden der sie haltenden Stellglieder komprimiert ist, diese eine Querausdehnung erfährt.

3. Motor nach Anspruch 1 oder 2, **dadurch gekennzeichnet, dass** er außerdem Mittel zum Steuern der abwechselnden Verlängerungs- und Verkürzungsbewegungen jedes der Stellglieder umfasst, wobei die jeweiligen Bewegungen des ersten Stellglieds und des zweiten Stellglieds phasenversetzt sind.

4. Motor nach einem der Ansprüche 1 bis 3, **dadurch gekennzeichnet, dass** die Führung (2) rohrförmig ist und dass der Halt des beweglichen Organs durch Verklemmen mindestens einer Klammer (30A, 30Z) im Inneren der Führung stattfindet.

5. Motor nach einem der Ansprüche 1 bis 4, **dadurch gekennzeichnet, dass** er außerdem eine vordere Gegenmasse (50A), eine hintere Gegenmasse (50Z), einen vorderen Koppler (40A) und einen hinteren Koppler (40Z) umfasst, wobei das mindestens eine erste Stellglied zwischen der vorderen Gegenmasse und dem hinteren Koppler montiert ist, das mindestens eine zweite Stellglied zwischen dem vorderen Koppler und der hinteren Gegenmasse montiert ist, die Gegenmasse und der hintere Koppler zum Verformen der mindestens einen hinteren Klammer dienen und die Gegenmasse und der vordere Koppler zum Verformen der mindestens einen vorderen Klammer dienen.

6. Motor nach einem der Ansprüche 1 bis 5, **dadurch gekennzeichnet, dass** die Klammern biegsame Metallschalen sind.

7. Motor nach einem der Ansprüche 1 bis 6, **dadurch gekennzeichnet, dass** der Läufer und der Ständer in Längsrichtung vorgespannt gehalten sind.

8. Motor nach Anspruch 7, **dadurch gekennzeichnet, dass** der Läufer mit einer Außenseite (57) der vorderen Gegenmassen (50A) in Kontakt ist.

9. Motor nach Anspruch 8, **dadurch gekennzeichnet, dass** das mindestens eine erste Stellglied ein Paar von ersten Stellgliedern (11, 12) ist und dass das mindestens eine zweite Stellglied ein Paar von zweiten Stellgliedern (21, 22) ist, wobei diese Stellglieder um eine Längsachse (X) des Motors herum regelmäßig angeordnet und von dieser Achse gleich beabstandet sind und jedes Stellglied eine Stellung einnimmt, die zu der eines Stellglieds desselben Paars diametral entgegengesetzt ist.

10. Motor nach einem der Ansprüche 1 bis 9, **dadurch gekennzeichnet, dass** die Stellglieder ein elektroaktives Material umfassen.

11. Bewegliches Element, das einen Motor nach einem der vorhergehenden Ansprüche umfasst.

12. Verfahren zum Bewegen eines Motors nach einem der Ansprüche 2 bis 10 linear längs einer Führung (2), umfassend, ausgehend von einer solchen Anfangsstellung, dass die mindestens eine vordere Klammer (30A) und die mindestens eine hintere Klammer (30Z) beide auf der Führung blockiert sind, die folgenden Schritte:
- Verlängerung des mindestens einen ersten Stellglieds (11, 12) und dann
- Verlängerung des mindestens einen zweiten Stellglieds (21, 22) und dann
- Verkürzung des mindestens einen ersten Stellglieds und dann
- Verkürzung des mindestens einen zweiten Stellglieds.

13. Verfahren zum In-Drehung-Versetzen des Rotors (6) eines Motors nach Anspruch 10, **dadurch gekennzeichnet, dass** man mit Hilfe der Stellglieder auf der Außenseite (57) der vorderen Gegenmasse (50A) eine fortschreitende Welle erzeugt.
